# EUROPEAN PATENT SPECIFICATION

(11) **EP 2 985 768 B1**
(45) Date of publication and mention of the grant of the patent: **25.09.2019**
(21) Application number: 14776191.0
(22) Date of filing: 27.03.2014
(51) Int. Cl.: H01F 1/08, C22C 38/00, H01F 1/057, H01F 41/02, B22F 9/04, C22C 33/02

(54) **R-T-B-BASED SINTERED MAGNET**
GESINTERTER MAGNET AUF R-T-B-BASIS
AIMANT FRITTÉ À BASE R-T-B

(30) Priority: 29.03.2013 JP 2013071834
(43) Date of publication of application: 17.02.2016
(73) Proprietor: Hitachi Metals, Ltd., Tokyo 105-8614 (JP)
(72) Inventor: KUNIYOSHI, Futoshi, Mishima-gun, Osaka 618-0013 (JP); ISHII, Rintaro, Mishima-gun, Osaka 618-0013 (JP); NISHIUCHI, Takeshi, Mishima-gun, Osaka 618-0013 (JP); KAWATA, Tsunehiro, Mishima-gun, Osaka 618-0013 (JP)
(74) Representative: Grünecker Patent- und Rechtsanwälte PartG mbB
(86) International application number: PCT/JP2014/058741
(87) International publication number: WO 2014/157451

(56) References cited:
- EP-A1- 0 651 401
- WO-A1-2012/002060
- WO-A1-2013/054842
- JP-A- S6 318 603
- JP-A- 2009 231 391
- US-A- 5 472 525

## Description

### Technical Field

The present invention relates to an R-T-B-based sintered magnet.

### Background Art

An R-T-B-based sintered magnet including an Nd₂Fe₁₄B type compound as a main phase (R is at least one of rare-earth elements and inevitably includes Nd, and T is a transition metal element and inevitably includes Fe) has been known as a permanent magnet with the highest performance among permanent magnets, and has been used in various motors for hybrid vehicles, electric vehicles, and home appliances.

However, in the R-T-B-based sintered magnet, coercivity H_{cJ} (hereinafter sometimes simply referred to as "H_{cJ}") decreases at an elevated temperature to cause irreversible thermal demagnetization. Therefore, when used particularly in motors for hybrid vehicles and electric vehicles, there is a need to maintain high H_{cJ} even at an elevated temperature.

To increase H_{cJ}, numerous heavy rare-earth elements (mainly, Dy) have hitherto been added to the R-T-B-based sintered magnet. However, there arose a problem that a residual magnetic flux density Bᵣ (hereinafter sometimes simply referred to as "Bᵣ") decreases. Therefore, there has recently been employed a method in which heavy rare-earth elements are diffused from the surface into the inside of the R-T-B-based sintered magnet to thereby increase the concentration of the heavy rare-earth elements at the outer shell part of main phase crystal grains, thus obtaining high H_{cJ} while suppressing a decrease in Bᵣ.

Dy has problems such as unstable supply and price fluctuations because of restriction of the producing district. Therefore, there is a need to develop technology for improving H_{cJ} of the R-T-B-based sintered magnet without using heavy rare-earth elements such as Dy.

Patent Document 1 discloses that a B concentration is decreased as compared with a conventional R-T-B-based alloy and one or more metal elements M selected from among Al, Ga, and Cu are included to form a R₂T₁₇ phase, and a volume fraction of a transition metal-rich phase (R₆T₁₃M) formed from the R₂T₁₇ phase as a raw material is sufficiently secured to obtain an R-T-B-based rare-earth sintered magnet having high coercivity while suppressing the content of Dy.

### Prior Art Document

### Patent Document

Patent Document 1: WO 2013/008756 A

### Summary of the Invention

### Problems to be Solved by the Invention

However, Patent Document 1 had a problem that since the B concentration is significantly decreased than usual, an existence ratio of a main phase decreases, leading to a significant reduction in Bᵣ. Although H_{cJ} increases, H_{cJ} is insufficient to satisfy requirements in recent days.

The present invention has been made so as to solve the above problems and an object thereof is to provide an R-T-B-based sintered magnet having high Bᵣ and high H_{cJ} without using Dy.

### Means for Solving the Problems

An aspect 1 of the present invention is directed to an R-T-B based sintered magnet which includes an Nd₂Fe₁₄B type compound as a main phase, and comprises the main phase, a first grain boundary phase located between two main phases, and a second grain boundary phase located between three or more main phases, the R-T-B based sintered magnet consisting of:
R: 29.0% by mass or more and 31.5% by mass or less (R being Nd and/or Pr),
Ga: 0.4% by mass or more and 0.6% by mass or less,
Al: 0.5% by mass or less (including 0% by mass), and balance being T (T is a transition metal element and inevitably includes Fe) and inevitable impurities.

The R-T-B based sintered magnet further optionally includes:
Cu: 0.05% by mass or more and 0.20% by mass or less.

An aspect 2 or the present invention is directed to the R-T-B based sintered magnet in the aspect 1, wherein the content of B is 0.87% by mass or more and 0.89% by mass or less.

An aspect 3 of the present invention is directed to the R-T-B based sintered magnet in any one of the aspects 1 or 2, wherein an R-Ga phase including R: 70% by mass or more and 95% by mass or less, Ga: 5% by mass or more and 30% by mass or less, and Fe: 20% by mass or less (including 0) is present in the first grain boundary phase.

An aspect 4 of the present invention is directed to the R-T-B based sintered magnet in the aspects 1 to 3, wherein an R-Ga phase including R:70% by mass or more and 95% by mass or less, Ga: 5% by mass or more and 30% by mass or less, and Fe: 20% by mass or less (including 0), and an R-Ga-Cu phase in which Ga or the R-Ga phase is partially replaces with Cu are present in the first grain boundary phase.

An aspect 5 of the present invention is directed to the R-T-B based sintered magnet in any one of the aspects 1 to 4, which includes a first grain boundary phase free from an R-T-Ga phase composed of R₆Fe₁₃Ga₁.

### Effects of the invention

According to the present invention, it is possible to provide an R-T-B based sintered magnet having high Bᵣ and high H_{cJ} without using Dy.

### Brief description of the drawings

Fig. 1 is a photograph showing the structure observation results by FE-TEM of sample No. 14 of Example.
Fig. 2 is a photograph showing an enlarges part encircled by a dotted line in Fig. 1.
Fig. 3 is a photograph showing the structure observation results by FE-TEM of sample No. 2 of Example.
Fig. 4 is a photograph showing an enlarged part encircled by a dotted line in Fig. 3.

### Embodiment of the Invention

The inventors have intensively been studied so as to solve the above problems and found that, as shown in the aspect 1 or 2 of the present invention, an R-T-B based sintered magnet having high Bᵣ and high H_{cJ} is obtained without using Dy by optimizing the contents of R, B, and Ga. As a result of an analysis of the R-T-B based sintered magnet thus obtained, the inventors have found that an R-Ga phase is present in a first grain boundary phase located between two main phases (hereinafter sometimes referred to as a "two-grain boundary phase") when including no Cu, and an R-Ga phase and an R-Ga-Cu phase are present in a first grain boundary phase located between two main phases when including Cu. As a result of a more detailed analysis, they have found that a first grain boundary phase free from an R-T-Ga phase is included.

There are still unclear points regarding the mechanism in which high Bᵣ and high H_{cJ} are obtained without using Dy by the existence of an R-Ga phase or an R-Ga and an R-Ga-Cu phase in a first grain boundary phase, and inclusion of a first grain boundary phase free from an R-T-Ga phase. A description will be made on the mechanism proposed by the inventors based on the findings they have had so far. It is to be noted that the description regarding the following mechanism is not intended to limit the technical scope of the present invention.

The R-T-B based sintered magnet enables an increase in Bᵣ by increasing an existence ratio of an Nd₂Fe₁₄B type compound which is a main phase. To increase the existence ratio of the Nd₂Fe₁₄B type compound, the amount of R, the amount of T, and the amount of B may be made closer to a stoichiometric ratio of the Nd₂Fe₁₄B type compound. If the amount of B for formation of the Nd₂Fe₁₄B type compound is lower than the stoichiometric ratio, a soft magnetic R₂T₁₇ phase is precipitated in a grain boundary phase, leading to a rapid reduction in H_{cJ}. However, if Ga is included in the magnet composition, an R-T-Ga phase is formed in place of an R₂T₁₇ phase, thus enabling suppression of a reduction in H_{cJ}.

The reason why a reduction in H_{cJ} is suppressed by formation of an R-T-Ga phase was initially supposed that an R₂T₁₇ phase causing a rapid reduction in H_{cJ} disappears and also the R-T-Ga phase thus formed has no or extremely weak magnetization. However, it becomes apparent that the R-T-Ga phase also has slight magnetization and, if the R-T-Ga phase excessively is present in the grain boundary phase, particularly, two-grain boundary phase in charge of H_{cJ}, magnetization prevents H_{cJ} from increasing. It also becomes apparent that an R-Ga phase is formed when including no Cu along with the formation of the R-T-Ga phase, while the R-Ga phase and the R-Ga-Cu phase are formed when including Cu along with the formation of the R-T-Ga phase.

Thus, it was supposed that H_{cJ} can be further increased if the R-Ga phase or the R-Ga and the R-Ga-Cu phase can be formed while suppressing formation of the R-T-Ga phase in the two-grain boundary phase. It was also supposed that a reduction in Bᵣ can also be suppressed since the amount of B does not cause a significant decrease in existence ratio of a main phase as a result of suppression of formation of the R₂T₁₇ phase so as to suppress formation of the R-T-Ga phase. However, if formation of the R-T-Ga phase is excessively suppressed, it is impossible to form the R-Ga phase or the R-Ga and the R-Ga-Cu phase. Thus, by controlling the amount of R and the amount of B within an appropriate range to adjust the precipitation amount of an R₂T₁₇ phase, and also by controlling the amount of Ga within an optimum range corresponding to the precipitation amount of the R₂T₁₇ phase, the R-Ga phase or the R-Ga and the R-Ga-Cu phase can be formed while suppressing the R-T-Ga phase from forming as small as possible. Whereby, it becomes possible to obtain a structure in which an R-Ga phase or an R-Ga and an R-Ga-Cu phase is (are) present in the two-grain boundary phase in the entire R-T-B based sintered magnet, and also numerous two-grain grain boundaries free from an R-T-Ga phase are present. Whereby, suppression of an increase in H_{cJ} due to the R-T-Ga phase is reduced and also a decrease in existence ratio of a main phase is suppressed, thus making it possible to more certainly obtain an R-T-B based sintered magnet having high Bᵣ and high H_{cJ}.

### [Composition of R-T-B-Based Sintered Magnet]

The R-T-B based sintered magnet according to one embodiment of the present invention consists of:
R: 29.0% by mass or more and 31.5% by mass or less (R being Nd and/or Pr),
B: 0.86% by mass or more and 0.90% by mass or less,
Ga: 0.4% by mass or more and 0.6% by mass or less,
Al: 0.5% by mass or less (including 0% by mass), and balance being T (T is a transition metal element, and inevitably includes Fe) and inevitable impurities.

Alternatively, the R-T-B based sintered magnet according to one embodiment of the present invention consists of:
R: 29.0% by mass or more and 31.5% by mass or less (R being Nd and/or Pr),
B: 0.86% by mass or more and 0.90% by mass or less,
   Ga: 0.4% by mass or more and 0.6% by mass or less,
   Cu: 0.05% by mass or more and 0.20% by mass or less
Al: 0.5% by mass or less (including 0% by mass), and
balance being T (T is a transition metal element, and inevitably includes Fe) and inevitable impurities.

The present invention can exert the effect capable of obtaining high Bᵣ and high H_{cJ} by combining the amount of R, the amount of B, and the amount of Ga within the above range. If any one of the amount of R, the amount of B, and the amount of Ga deviates from the above range, formation of the R-T-Ga phase is excessively suppressed. Accordingly, in the entire R-T-B based sintered magnet, the R-Ga phase, or the R-Ga and the R-Ga-Cu phase is/are not formed in a two-grain boundary phase, whereas a two-grain boundary phase free from an R-T-Ga phase decreases (two-grain boundary phase including an R-T-Ga phase becomes dominant), thus failing to obtain high Bᵣ and high H_{cJ}.

R is Nd and/or Pr. The content of R is set within a range of 29.0% by mass or more and 31.5% by mass or less. The content of B is set within a range of 0.86% by mass or more and 0.90% by mass or less. The content of B is preferably 0.87% by mass or more and 0.89% by mass or less. The content of Ga is set within a range of 0.4% by mass or more and 0.6% by mass or less. Balance T is a transition metal element, and inevitably includes Fe. Examples of the transition metal element except for Fe include Co. It is not preferable that the amount of Co substitution of more than 10% leads to a reduction in Br. Examples of the transition metal element may further include a small amount of V, Cr, Mn, Zr, Nb, Mo, Hf, Ta, W, and the like.

In addition to each element mentioned above, 0.05% by mass or more and 0.20% by mass or less of Cu may be included. Inclusion of Cu lead to formation of an R-Ga-Cu phase in the two-grain boundary phase, together with an R-Ga phase. Formation of the R-Ga-Cu phase leads to a further increase in H_{cJ} as compared with the case of the R-Ga phase alone. The content of Cu is preferably 0.08% by mass or more and 0.15% by mass or less. The magnet may have the same degree of Al content as usual. The range where known effects are exerted is set at 0.5% by mass or less (including 0% by mass), and preferably 0.3% by mass or less.

In the present invention, the R-T-Ga phase may include: R: 15% by mass or more and 65% by mass or less (preferably, R: 40% by mass or more and 65% by mass or less), T: 20% by mass or more and 80% by mass or less, Ga: 2% by mass or more and 20% by mass or less (when the content of R is 40% by mass or more and 65% by mass or less, the content of T may be 20% by mass or more and 55% by mass or less, and the content of Ga may be 2% by mass or more and 15% by mass or less), and examples thereof include an R₆Fe₁₃Ga₁ compound. More specifically, the R-T-Ga phase may be entirely composed of an R₆Fe₁₃Ga₁ compound or may include an R₆Fe₁₃Ga₁ compound, as long as it includes R: 15% by mass or more and 65% by mass or less (preferably, R: 40% by mass or more and 65% by mass or less), T: 20% by mass or more and 80% by mass or less, Ga: 2% by mass or more and 20% by mass or less (when the content of R is 40% by mass or more and 65% by mass or less, the content of T may be 20% by mass or more and 55% by mass or less, and the content of Ga may be 2% by mass or more and 15% by mass or less) . The R-T-Ga phase may include other elements except for the above-mentioned R, T, and Ga. The R-T-Ga phase may contain, as these other elements, one or more elements selected from such as Al and Cu. The R-Ga phase may include 70% by mass or more and 95% by mass or less of R, 5% by mass or more and 30% by mass or less of Ga, and 20% by mass or less (including 0) of Fe, and examples thereof include an R₃Ga₁ compound. More specifically, the R-Ga phase may be entirely composed of an R₃Ga₁ compound or may include an R₃Ga₁ compound, as long as it includes R: 70% by mass or more and 95% by mass or less, Ga: 5% by mass or more and 30% by mass or less, and Fe: 20% by mass or less (including 0). The R-Ga-Cu phase may be a phase in which Ga of the R-Ga phase is partially replaced with Cu, and examples thereof include an R₃(Ga,Cu)₁ compound. More specifically, the R-Ga-Cu phase may be entirely composed of an R₃(Ga,Cu)₁ compound or may include an R₃(Ga,Cu)₁ compound, as long as Ga of the R-Ga phase is partially replaced with Cu.

### [Method for Producing R-T-B-based Sintered Magnet]

An example of a method for producing an R-T-B based sintered magnet will be described. The method for producing an R-T-B based sintered magnet includes a step of obtaining an alloy powder, a molding step, a sintering step, and a heat treating step. Each step will be described below.

### (1) Step of obtaining Alloy Powder

Metals or alloys of the respective elements are prepared so as to obtain the above-mentioned composition, and a flaky alloy is produced from them using a strip casting method. The flaky alloy thus obtained is subjected to hydrogen decrepitation to obtain a coarsely crushed powder having a size of 1.0 mm or less. Next, the coarsely crushed powder is finely pulverized by a jet mill to obtain a finely pulverized powder (alloy powder) having a particle diameter D50 (value obtained by a laser diffraction method using an air flow dispersion method (median size)) of 3 to 7 µm. A known lubricant may be used as a pulverization assistant in a coarsely crushed powder before jet mill pulverization, or an alloy powder during and after jet mill pulverization.

### (2) Molding Step

Using the alloy powder thus obtained, molding in a magnetic field is performed to obtain a molded body. The molding in a magnetic field may be performed using known optional methods of molding in a magnetic field including a dry molding method in which a dry alloy powder is loaded in a cavity of a die and then molded while applying a magnetic field, and a wet molding method in which a slurry containing the alloy powder dispersed therein is injected in a cavity of a die and then molded while discharging a dispersion medium of the slurry.

### (3) Sintering Step

The molded body is sintered to obtain a sintered magnet. A known method can be used to sinter the molded body. To avoid oxidation due to an atmosphere during sintering, sintering is preferably performed in a vacuum atmosphere or an atmospheric gas. It is preferable to use, as the atmospheric gas, an inert gas such as helium or argon.

### (4) Heat Treating Step

The sintered magnet thus obtained is preferably subjected to a heat treating for the purpose of improving magnetic properties. Known conditions can be employed for heat treating temperature, heat treating time, and the like. To adjust the size of the sintered magnet, the magnet obtained may be subjected to machining such as grinding. In that case, the heat treating may be performed before or after machining. The sintered magnet may also be subjected to a surface treatment. The surface treatment may be a known surface treatment, and it is possible to perform surface treatments, for example, Al vapor deposition, Ni electroplating, resin coating, and the like.

### Examples

The present invention will be described in more detail below by way of Examples, but the present invention is not limited thereto.

Nd having a purity of 99.5% by mass or more, electrolytic iron, electrolytic Co, Al, Cu, Ga, and ferroboron alloy were prepared so that the composition of a sintered magnet became each composition shown in Table 1, and then these raw materials were melted and subjected to casting by a strip casting method to obtain a flaky alloy having a thickness of 0.2 to 0.4 mm. The flaky alloy thus obtained was subjected to hydrogen embrittlement in a pressurized hydrogen atmosphere and then subjected to a dehydrogenation treatment of heating to 550°C in vacuum and cooling to obtain a coarsely crushed powder. To the coarsely crushed powder thus obtained, zinc stearate was added as a lubricant in the proportion of 0.04% by mass based on 100% by mass of the coarsely crushed powder, followed by mixing. Using an air flow-type pulverizer (jet milling machine), the mixture was subjected to dry pulverization in a nitrogen gas flow to obtain a finely pulverized powder (alloy powder) having a particle diameter D50 (median size) of 4 µm. The oxygen concentration in a nitrogen gas during pulverization was controlled to 50 ppm or less. The particle diameter D50 is the value obtained by a laser diffraction method using an air flow dispersion method.

The alloy powder thus obtained was mixed with a dispersion medium to prepare a slurry. Normal dodecane was used as a solvent, and methyl caprylate was added as a lubricant. Regarding the concentration of the slurry, the proportion of the alloy powder was set at 70% by mass and that of the dispersion medium was set at 30% by mass, while the proportion of the lubricant was set at 0.16% by mass based on 100% by mass of the alloy powder. The slurry was molded in a magnetic field to obtain a molded body. The magnetic field during molding was static magnetic field set at 0.8 MA/m, and the molding pressure was set at 5 MPa. A molding device used was a so-called perpendicular magnetic field molding device (transverse magnetic field molding device) in which a magnetic field application direction and a pressuring direction are perpendicular to each other.

The molded body thus obtained was sintered in vacuum at 1,020°C for 4 hours to obtain a sintered magnet. The sintered magnet had a density of 7.5 Mg/m³ or more. The sintered body thus obtained was subjected to a heat treating of retaining at 800°C for 2 hours and cooling to room temperature, followed by retaining at 500°C for 2 hours and cooling to room temperature. The sintered magnet after the heat treating was machined to produce samples of 7 mm in length × 7 mm in width × 7 mm in thickness, and Bᵣ and H_{cJ} of each sample were measured by a B-H tracer. The measurements results are shown in Table 1.

**[Table 1]**

| Sample No. | Composition of sintered magnet (% by mass) | | | | | | | Br(T) | H_{cJ} (kA/m) | Remarks |
|---|---|---|---|---|---|---|---|---|---|---|
| | Nd | B | Ga | Cu | Co | Al | Fe | | | |
| 1 | 28.50 | 0.88 | 0.50 | - | 0.50 | 0.28 | 69.34 | 1.41 | 700 | Comparative Example |
| 2 | 29.00 | 0.85 | 0.50 | - | 0.50 | 0.28 | 68.87 | 1.36 | 890 | Comparative Example |
| 3 | 29.00 | 0.86 | 0.50 | - | 0.50 | 0.28 | 68.86 | 1.39 | 1230 | Example of the present invention |
| 4 | 29.00 | 0.89 | 0.50 | - | 0.50 | 0.28 | 68.83 | 1.40 | 1290 | Example of the present invention |
| 5 | 29.00 | 0.90 | 0.50 | - | 0.50 | 0.28 | 68.82 | 1.40 | 1240 | Example of the present invention |
| 6 | 29.00 | 0.91 | 0.50 | - | 0.50 | 0.28 | 68.81 | 1.41 | 1050 | Comparative Example |
| 7 | 30.00 | 0.85 | 0.50 | - | 0.50 | 0.28 | 67.87 | 1.34 | 1100 | Comparative Example |
| 8 | 30.00 | 0.86 | 0.50 | - | 0.50 | 0.28 | 67.86 | 1.37 | 1365 | Example of the present invention |
| 9 | 30.00 | 0.88 | 0.50 | - | 0.50 | 0.28 | 67.84 | 1.38 | 1400 | Example of the present invention |
| 10 | 30.00 | 0.90 | 0.50 | - | 0.50 | 0.28 | 67.82 | 1.39 | 1365 | Example of the present invention |
| 11 | 30.00 | 0.91 | 0.50 | - | 0.50 | 0.28 | 67.81 | 1.39 | 1150 | Comparative Example |
| 12 | 31.50 | 0.85 | 0.50 | - | 0.50 | 0.28 | 66.37 | 1.31 | 1420 | Comparative Example |
| 13 | 31.50 | 0.86 | 0.50 | - | 0.50 | 0.28 | 66.36 | 1.33 | 1580 | Example of the present invention |
| 14 | 31.50 | 0.88 | 0.50 | - | 0.50 | 0.28 | 66.34 | 1.35 | 1650 | Example of the present invention |
| 15 | 31.50 | 0.90 | 0.50 | - | 0.50 | 0.28 | 66.32 | 1.36 | 1550 | Example of the present invention |
| 16 | 31.50 | 0.91 | 0.50 | - | 0.50 | 0.28 | 66.31 | 1.36 | 1240 | Comparative Example |
| 17 | 32.00 | 0.89 | 0.50 | - | 0.50 | 0.28 | 65.83 | 1.34 | 1300 | Comparative Example |
| 18 | 32.24 | 0.88 | 0.50 | - | 0.50 | 0.28 | 65.60 | 1.33 | 1300 | Comparative Example |
| 19 | 31.00 | 0.89 | 0.50 | - | 0.50 | 0.28 | 66.83 | 1.36 | 1530 | Example of the present invention |
| 20 | 31.00 | 0.89 | 0.50 | 0.05 | 0.50 | 0.28 | 66.78 | 1.36 | 1590 | Example of the present invention |
| 21 | 31.00 | 0.89 | 0.50 | 0.10 | 0.50 | 0.28 | 66.73 | 1.36 | 1610 | Example of the present invention |
| 22 | 31.00 | 0.89 | 0.50 | 0.20 | 0.50 | 0.28 | 66.63 | 1.36 | 1600 | Example of the present invention |
| 23 | 31.00 | 0.89 | 0.30 | - | 0.50 | 0.28 | 67.03 | 1.36 | 1320 | Comparative Example |
| 24 | 31.00 | 0.89 | 0.40 | - | 0.50 | 0.28 | 66.93 | 1.36 | 1510 | Example of the present invention |
| 25 | 31.00 | 0.89 | 0.60 | - | 0.50 | 0.28 | 66.73 | 1.35 | 1540 | Example of the present invention |
| 26 | 31.00 | 0.89 | 0.70 | - | 0.50 | 0.28 | 66.63 | 1.34 | 1400 | Comparative Example |

As is apparent from Table 1, an R-T-B based sintered magnet having high Bᵣ and high H_{cJ} is obtained by adjusting the composition within the following range where Nd: 29.0% by mass or more and 31.5% by mass or less, B: 0.86% by mass or more and 0.90% by mass or less, and Ga: 0.4% by mass or more and 0.6% by mass or less. It is apparent that H_{cJ} is more increased than the case of including no Cu (sample No. 19) by including 0.05% by mass or more and 0.20% by mass or less of Cu (samples Nos. 20 to 22). Since most excellent Bᵣ and H_{cJ} are obtained when the amount of B is about 0.88% by mass, it is considered that the amount of B is preferably 0.87% by mass or more and 0.89% by mass or less.

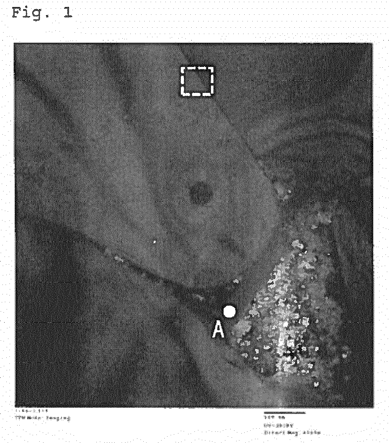

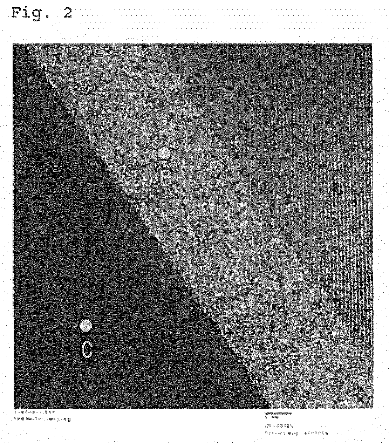

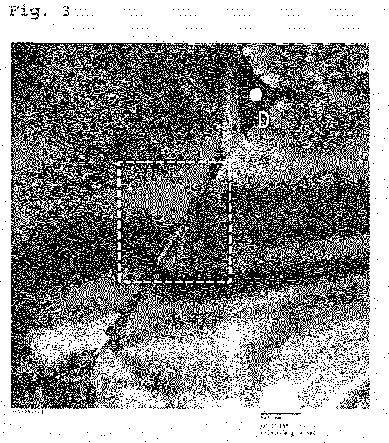

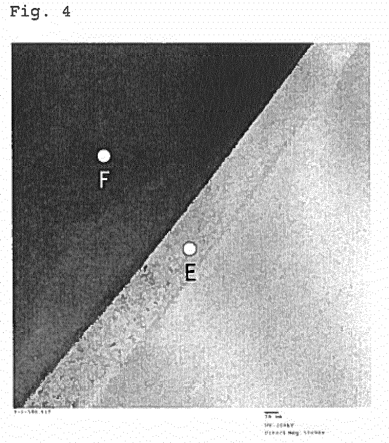

For sample No. 14 (Example of the present invention) and sample No. 2 (Comparative Example) in Table 1, structure observation by FE-TEM (field-emission transmission electron microscope) was performed. The results are shown in Fig. 1 to Fig. 4. Fig. 1 and Fig. 2 are photographs showing the results of structure observation of sample No. 14 (Example of the present invention), while Fig. 3 and Fig. 4 are photographs showing the results of structure observation of sample No. 2 (Comparative Example). Fig. 2 is a photograph showing an enlarged part encircled by a dotted line in Fig. 1, while Fig. 4 is a photograph showing an enlarged part encircled by a dotted line in Fig. 3. For points A to F in Fig. 1 to Fig. 4, composition analysis by EDS (energy dispersive X-ray spectrometry) was performed. The results are shown in Table 2.

**[Table 2]**

| Point | Results of composition analysis by EDS (% by mass) | | | | | Remarks |
|---|---|---|---|---|---|---|
| | Nd | Ga | Co | Al | Fe | |
| A | 59.3 | 4.7 | 0.9 | 1.2 | 31.6 | Example of the present invention |
| B | 78.3 | 7.0 | 1.4 | 0.8 | 4.1 | Example of the present invention |
| C | 37.3 | 0.0 | 0.8 | 0.8 | 59.1 | Example of the present invention |
| D | 80.8 | 9.4 | 2.0 | 0.8 | 1.8 | Comparative Example |
| E | 60.6 | 3.8 | 0.6 | 0.9 | 31.6 | Comparative Example |
| F | 38.2 | 0.0 | 0.6 | 0.8 | 58.2 | Comparative Example |

In Fig. 1, a part of point A is a second grain boundary phase located between three or more main phases (grain boundary multi-point) and a part encircled by a dotted line indicates two main phases and a first grain boundary phase located between two main phases (two-grain boundary phase) and, as shown in Fig. 2, point B is a two-grain boundary phase and point C is a main phase (Nd₂Fe₁₄B type compound) . In Fig. 3, a part of point D is a grain boundary multi-point, a part encircled by a dotted line indicates two main phases and a two-grain boundary phase and, as shown in Fig. 4, point E is a two-grain boundary phase and point F is a main phase.

The results shown in Table 2 reveal that, in sample No. 14 which is Example of the present invention, an R-T-Ga phase (Nd₆Fe₁₃Ga₁ compound) is present at point A (grain boundary multi-point), an R-Ga phase (Nd₃Ga₁ compound) is present at point B (two-grain boundary phase), and point C indicates a main phase. Thus, it is apparent that an R-Ga phase is present in a first grain boundary phase in an R-T-B based sintered magnet according to the present invention. In consideration of the fact that the content of Fe at point B is 20% or less, it is apparent that an R-T-Ga phase is not present at point B, namely, a first grain boundary phase free from an R-T-Ga phase is included.

The results shown in Table 2 reveal that, in sample No. 2 which is Comparative Example, an R-Ga phase (Nd₃Ga₁ compound) is present at point D (grain boundary multi-point), an R-T-Ga phase (Nd₆Fe₁₃Ga₁ compound) is present at point E (two-grain boundary phase), and point C indicates a main phase. Thus, it is apparent that an R-Ga phase is not present in a first grain boundary phase and an R-T-Ga phase is present, in an R-T-B based sintered magnet according to Comparative Example. Sample No. 14 exhibits Bᵣ of 1.35 T and H_{cJ} of 1,650 kA/m, and sample No. 2 exhibits Bᵣ of 1.36 T and H_{cJ} of 890 kA/m. Thus, according to the present invention, high Bᵣ is obtained since the amount of B is set to be such an extent that does not cause a significant decrease in existence ratio of a main phase, and also high H_{cj} is obtained because of including a first grain boundary phase free from R-T-Ga phase obstructing an increase in H_{cJ} existing thereon.

### Industrial Applicability

The R-T-B-based sintered magnet according to the present invention can be suitably employed in motors for hybrid vehicles and electric vehicles.

## Claims

1. A R-T-B based sintered magnet including a Nd₂Fe₁₄B type compound as a main phase comprising:
the main phase,
a first grain boundary phase located between two main phases, and
a second grain boundary phase located between three or more main phases,
wherein the composition of the R-T-B based sintered magnet consists of:
R: 29.0% by mass or more and 31.5% by mass or less, wherein R being Nd and/or Pr,
B: 0.86% by mass or more and 0.90% by mass or less,
Ga: 0.4% by mass or more and 0.6% by mass or less,
Al: 0.5% by mass or less, including 0% by mass, and the balance being T, wherein T is a transition metal element and inevitably includes Fe; and inevitable impurities,
wherein the R-T-B based sintered magnet optionally further includes:
Cu: 0.05% by mass or more and 0.20% by mass or less.

2. The R-T-B based sintered magnet according to claim 1, wherein the content of Cu is 0.08% by mass or more and 0.15% by mass or less.

3. The R-T-B based sintered magnet according to claim 1 or 2, wherein the content of B is 0.87% by mass or more and 0.89% by mass or less.

4. The R-T-B based sintered magnet according to any one of claims 1 to 3, wherein the content of Al is 0.3% by mass or less, including 0% by mass.

5. The R-T-B based sintered magnet according to any one of claims 1 to 4, wherein an R-Ga phase including R: 70% by mass or more and 95% by mass or less, Ga: 5% by mass or more and 30% by mass or less, and Fe: 20% by mass or less, including 0, is present in the first grain boundary phase.

6. The R-T-B based sintered magnet according to any of claims 1 to 5, wherein an R-Ga phase including R: 70% by mass or more and 95% by mass or less, Ga: 5% by mass or more and 30% by mass or less, and Fe: 20% by mass or less, including 0, and an R-Ga-Cu phase in which Ga of the R-Ga phase is partially replaced with Cu are present in the first grain boundary phase.

7. The R-T-B based sintered magnet according to any one of claims 1 to 6, including a first grain boundary phase free from an R-T-Ga phase composed of R₆Fe₁₃Ga₁.

## Patentansprüche

1. R-T-B basierender gesinterter Magnet, beinhaltend eine Verbindung vom Typ Nd₂Fe₁₄B als eine Hauptphase, umfassend:
die Hauptphase,
eine erste Korngrenzenphase, die sich zwischen zwei Hauptphasen befindet, und
eine zweite Korngrenzenphase, die sich zwischen drei oder mehr Hauptphasen befindet,
wobei die Zusammensetzung des R-T-B basierenden gesinterten Magneten aus:
R: 29,0 Massen-% oder mehr und 31,5 Massen-% oder weniger, wobei R Nd und/oder Pr ist,
B: 0,86 Massen-% oder mehr und 0,90 Massen-% oder weniger,
Ga: 0,4 Massen-% oder mehr und 0,6 Massen-% oder weniger,
Al: 0,5 Massen-% oder weniger, beinhaltend 0 Massen-%, besteht, und
wobei der Rest T ist, wobei T ein Übergangsmetallelement ist und zwangsläufig Fe und unvermeidliche Verunreinigungen beinhaltet,
wobei der R-T-B basierende gesinterte Magnet optional weiterhin beinhaltet:
Cu: 0,05 Massen-% oder mehr und 0,20 Massen-% oder weniger.

2. Der R-T-B basierende gesinterte Magnet nach Anspruch 1, wobei der Gehalt an Cu 0,08 Massen-% oder mehr und 0,15 Massen-% oder weniger ist.

3. Der R-T-B basierende gesinterte Magnet nach Anspruch 1 oder 2, wobei der Gehalt an B 0,87 Massen-% oder mehr und 0,89 Massen-% oder weniger ist.

4. Der R-T-B basierende gesinterte Magnet nach irgendeinem der Ansprüche 1 bis 3, wobei der Gehalt an Al 0,3 Massen-% oder weniger, beinhaltend 0 Massen-%, ist.

5. Der R-T-B basierende gesinterte Magnet nach irgendeinem der Ansprüche 1 bis 4, wobei eine R-Ga-Phase beinhaltend R: 70 Massen-% oder mehr und 95 Massen-% oder weniger, Ga: 5 Massen-% oder mehr und 30 Massen-% oder weniger, und Fe: 20 Massen-% oder weniger, beinhaltend 0, in der ersten Korngrenzenphase vorhanden ist.

6. Der R-T-B basierende gesinterte Magnet nach irgendeinem der Ansprüche 1 bis 5, wobei eine R-Ga-Phase beinhaltend R: 70 Massen-% oder mehr und 95 Massen-% oder weniger, Ga: 5 Massen-% oder mehr und 30 Massen-% oder weniger, und Fe: 20 Massen-% oder weniger, beinhaltend 0, und eine R-Ga-Cu-Phase, in der Ga der R-Ga-Phase teilweise durch Cu ersetzt ist, in der ersten Korngrenzenphase vorhanden sind.

7. Der R-T-B basierende gesinterte Magnet nach irgendeinem der Ansprüche 1 bis 6, beinhaltend eine erste Korngrenzenphase, die frei von einer R-T-Ga-Phase, zusammengesetzt aus R₆Fe₁₃Ga₁, ist.

## Revendications

1. Aimant fritté à base de R-T-B comprenant un composé du type Nd₂Fe₁₄B en tant que phase principale comprenant :
la phase principale,
une première phase de frontière de grain située entre deux phases principales, et
une seconde phase de frontière de grain située entre trois ou plus de trois phases principales,
dans lequel la composition de l'aimant fritté à base de R-T-B consiste en :
R : 29,0 % en masse ou plus et 31,5 % en masse ou moins, R étant Nd et/ou Pr,
B : 0,86 % en masse ou plus et 0,90 % en masse ou moins,
Ga : 0,4 % en masse ou plus et 0,6 % en masse ou moins,
Al : 0,5 % en masse ou moins, y compris 0 % en masse,
et le reste étant T, dans lequel T est un élément de métal de transition et inclut inévitablement Fe ; et des impuretés inévitables,
dans lequel l'aimant fritté à base de R-T-B comprend en outre de manière facultative :
Cu : 0,05 % en masse ou plus et 0,20 % en masse ou moins.

2. Aimant fritté à base de R-T-B selon la revendication 1, dans lequel la teneur en Cu est de 0,08 % en masse ou plus et de 0,15 % en masse ou moins.

3. Aimant fritté à base de R-T-B selon la revendication 1 ou 2, dans lequel la teneur en B est de 0,87 % en masse ou plus et de 0,89 % en masse ou moins.

4. Aimant fritté à base de R-T-B selon l'une quelconque des revendications 1 à 3, dans lequel la teneur en Al est de 0,3 % en masse ou moins, y compris 0 % en masse.

5. Aimant fritté à base de R-T-B selon l'une quelconque des revendications 1 à 4, dans lequel une phase R-Ga comprenant R : 70 % en masse ou plus et 95 % en masse ou moins, Ga : 5 % en masse ou plus et 30 % en poids masse ou moins, et Fe : 20 % en masse ou moins, y compris 0, est présente dans la première phase de frontière de grain.

6. Aimant fritté à base de R-T-B selon l'une quelconque des revendications 1 à 5, dans lequel une phase R-Ga comprenant R : 70 % en masse ou plus et 95 % en masse ou moins, Ga : 5 % en masse ou plus et 30 % en masse ou moins, et Fe : 20 % en masse ou moins, y compris 0, et une phase R-Ga-Cu dans laquelle Ga de la phase R-Ga est partiellement remplacée par Cu sont présentes dans la première phase de frontière de grain.

7. Aimant fritté à base de R-T-B selon l'une quelconque des revendications 1 à 6, comprenant une première phase de frontière de grain sans phase R-T-Ga composée de R₆Fe₁₃Ga₁.
